# EUROPÄISCHE PATENTSCHRIFT

(11) **EP 0 391 210 B1**
(45) Veröffentlichungstag und Bekanntmachung des Hinweises auf die Patenterteilung: **07.12.1994**
(21) Anmeldenummer: 90105782.8
(22) Anmeldetag: 27.03.1990
(51) Int. Cl.: B32B 21/08

(54) **Verbundelement für Bauzwecke**
Composite element for construction
Elément composite pour la construction

(30) Priorität: 04.04.1989 DE 8904124 U
(43) Veröffentlichungstag der Anmeldung: 10.10.1990
(73) Patentinhaber: Heidelberger Dämmsysteme GmbH, D-69115 Heidelberg (DE)
(72) Erfinder: Grimm, Christian, D-33442 Herzebrock-Clarholz (DE)
(74) Vertreter: Meyer-Roedern, Giso, Dr.

(56) Entgegenhaltungen:
- DE-A- 2 815 091
- DE-A- 3 424 694
- DE-U- 7 624 223

## Beschreibung

Die Erfindung betrifft ein Verbundelement für Bauzwecke mit einer inneren Platte aus Hartschaumstoff, insbesondere Polystyrol-Partikel-Schaumstoff und wenigstens einer damit verbundenen äußeren Deckschicht, zu der eine dünne Holzwerkstoffplatte in Form einer Hartfaserplatte oder Spanplatte gehört, deren äußere Oberfläche mit einem Dekor versehen ist.

Derartige Verbundelemente sind aus dem DE-GM 85 32 867, DE-GM 17 15 436, DE-GM 68 09 700 und DE-GM 76 24 223 bekannt.

Das DE-GM 85 32 867 beschreibt eine Platte aus Schaumstoff, insbesondere Hartschaumstoff, die mit einer dünnen Spanplatte abgedeckt ist. Die Spanplatte ist einseitig mit einer Oberflächenbeschichtung aus Papier versehen, die ein Auftragen von Farbe oder Lack ermöglichen soll.

Das DE-GM 17 15 436 beschreibt eine Verbundplatte mit einer Isolierschicht aus Schaumstoff und Deckschichten aus Holz oder Preßspan, die in Masse beliebig gefärbt, pigmentiert oder gemustert sein können.

Das DE-GM 68 09 700 beschreibt ein Bauelement mit einer Schicht aus aufgeschäumtem Polystyrol und einer starren Verkleidung aus Sperrholz, Holz oder einer durch Zusammenpressen von Partikeln gebildeten Platte. Die Verkleidung ist zum Anbringen von Anstrichen, Tapete oder eines anderen Belags geeignet.

Aus dem DE-GM 76 24 223 ist eine Isolierverbundplatte bekannt, bei der auf einer Hartschaumstoffplatte eine Karton-, Hartfaser- oder Sperrholzplatte als Deckplatte aufkaschiert ist. Die freie Oberfläche der Deckplatte soll mit einer Kunststoff-Folie, einer Korkschicht einem Edelholzfurnier, einer Textil - oder Gewebetapete überzogen sein.

Das DE-GM 82 32 832 beschreibt einen Wand- oder Deckenbelag mit einer Platte aus Schaumstoff, die mit einer Deckschicht aus Pappe versehen ist. Die Deckschicht ist mit einem Holzmuster oder mit anderen dekorativen Mustern bedruckt.

Eine ähnliche platte aus Holzschliffpappe, die unmittelbar bedruckt ist und mit einer Unterlage, insbesondere aus Schaumstoff laminiert sein kann, ist aus der DE-OS 28 15 091 bekannt. Ein Bedrucken von Pappe mit oder ohne Holzschliff als Füllstoff ist selbstverständlich weit verbreiteter Stand der Technik.

Die DE-OS 29 27 026 beschreibt eine Platte aus Hartschaum, die mit einer Deckschicht aus Papierlagen, Pappe oder Karton versehen ist. Die Außenseite der Deckschicht soll tapezierbar oder streichbar und/oder mit einer Dekoroberfläche, z. B. Brettimitation, Tapete oder Farbe versehen sein.

Das DE-GM 72 12 981 beschreibt eine Holzspanplatte, auf die eine Dekorschicht, die bedruckt sein kann, mittels eines thermoplastischen Bindemittels aufgeklebt ist.

Das DE-GM 82 05 445 beschreibt eine Verkleidungsplatte mit einer Isolierplatte aus Schaumstoff, deren beide Oberflächen mit materialschlüssig angeordneten Hartfaserplatten verkleidet sind. Auf der Sichtseite der Verkleidungsplatte ist eine aus Holz bestehende, vorzugsweise als Furnier ausgebildete Platte aufgebracht. Die Furniertechnik ist aufwendig und teuer, und man ist in der Dekorgestaltung eingeschränkt. Eine Außenschicht aus Holz, insbesondere Furnier, ist auch nicht für alle Anwendungen optimal, man denke beispielsweise an Naßräume.

Aus der DE-OS 34 24 694, dem DE-GM 81 19 591 und der CH-PS 485 083 sind Verbundelemente mit einer Dampfsperre bekannt.

Aufgabe der Erfindung ist es, ein in der Herstellung unaufwendiges, mit einem fertigen Dekor versehenes Verbundelement der eingangs genannten Art zu schaffen.

Diese Aufgabe wird mit einem Verbundelement der genannten Art dadurch gelöst, daß das Dekor unmittelbar auf die Holzwerkstoffplatte aufgedruckt ist.

Das unmittelbare Aufdrucken eines Dekors auf die dafür überraschenderweise geeignete strukturierte Oberfläche einer Hartfaserplatte oder Spanplatte erbringt beträchtliche fertigungstechnische Vorteile und Vereinfachungen. Man erhält so mit geringem Aufwand ein qualitativ hochwertiges Produkt mit vielfältigen Einsatzmöglichkeiten.

Bei einer bevorzugten Ausführungsform ist die Holzwerkstoffplatte zwischen 1 mm und 6 mm, vorzugsweise 2,5 mm bis 3 mm dick.

Die Holzwerkstoffplatte kann unmittelbar mit der Hartschaumplatte verklebt sein. Man hat so ein Verbundelement mit besonders einfachem Aufbau, das vor allem für Anwendungsfälle geeignet ist, in denen mit Schwitzwasserbildung nicht zu rechnen ist.

Zwischen die Hartschaumplatte und die Holzwerkstoffplatte kann aber auch eine Folie mit hohem Dampfdiffusionswiderstand, vorzugsweise eine Polyethylenfolie, eingeschaltet sein. Diese bildet eine vorteilhafte Dampfsperre. Das Verbundelement ist damit für Anwendungsfälle geeignet, in denen mit Schwitzwasserbildung zu rechnen ist. Die Folie ist vorzugsweise sowohl mit der Hartschaumplatte, als auch mit der Holzwerkstoffplatte verklebt.

Es gibt vier Grundvarianten des erfindungsgemäßen Verbundelements. Die Hartschaumplatte kann zum einen auf einer Seite mit einer Deckschicht versehen sein, die die erwähnte Folie enthält. Zum zweiten kann die Hartschaumplatte auf einer Seite mit einer Deckschicht ohne Folie versehen sein. Man hat so Verbundelemente für Anwendungsfälle, in denen nach Verlegung nur eine Seite des Verbundelements sichtbar ist. Insbesondere ist an Dachplatten, Wandplatten, Deckenplatten und Bodenplatten zu denken.

In einer dritten Grundvariante ist die Hartschaumplatte auf beiden Seiten mit Deckschichten versehen, die die erwähnte Folie enthalten, und in der vierten Grundvariante sind auf beiden Seiten der Hartschaumplatte Deckschichten ohne Folie vorgesehen. Man hat so Verbundelemente für Anwendungsfälle, in denen nach der Verlegung beide Plattenseiten sichtbar sind. Insbesondere ist an einen Raumteiler zu denken.

Schließlich kann für besondere Anwendungen eine Hartschaumplatte auch beidseits mit Deckschichten versehen sein, von denen eine eine Folie enthält, und die andere nicht.

Die Erfindung wird im folgenden anhand von in der Zeichnung dargestellten Ausführungsbeispielen näher erläutert. Schematisch zeigen:
- Fig. 1 bis 5: die Schichtenfolge von fünf Verbundplatten gemäß der Erfindung, wobei die Schichtdicken nicht maßstabsgerecht wiedergegeben sind;
- Fig. 6: die Draufsicht mit Blick in Richtung VI auf die Außenseite eines pfannengedeckten Dachs mit als Dachplatte verlegten Verbundplatten gemäß der Erfindung;
- Fig. 7: einen Schnitt durch ein Gebäude, in dem Verbundplatten gemäß der Erfindung als Bodenplatten, Wandplatten, Deckenplatten sowie als Raumteiler verlegt sind.

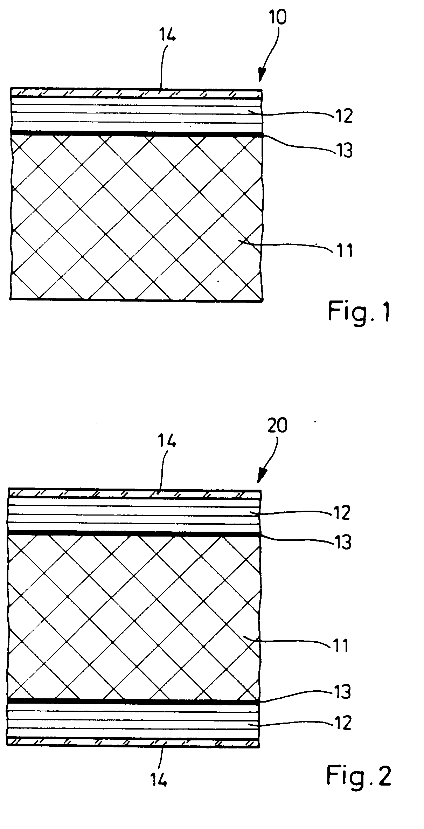

Fig. 1 zeigt eine Verbundplatte 10, die aus einer Hartschaumplatte 11 und einer damit vollflächig verklebten Hartfaserplatte 12 besteht. Die Schicht Kleber ist mit 13 bezeichnet. Die Hartfaserplatte 12 ist mit einem Dekor 14 bedruckt.

Die Hartschaumplatte 11 besteht aus Polystyrol-Partikel-Schaumstoff. Sie hat eine Dicke von mehreren cm. Die Hartfaserplatte 12 ist ein aus verholzten Fasern hergestellter, plattenförmiger Holzwerkstoff mit einem spezifischem Gewicht von typischerweise 800 - 1000 kg/m³. Die Dicke der Hartfaserplatte beträgt 1 bis 6 mm, und vorzugsweise 2,5 bis 3 mm. Statt einer Hartfaserplatte 12 kann auch eine Holzspanplatte entsprechender Dicke vorgesehen sein.

Zur Verbindung der Hartschaumplatte 11 mit der Hartfaserplatte 12 bzw. Holzspanplatte dient ein handelsüblicher, aushärtender wasserabweisender Kleber, vorzugsweise Polyurethan-Ein- oder -Zwei-Komponeten-Kleber, insbesondere ein FCKW-freier Kleber. Das Dekor 14 besteht aus einer wasserverdünnbaren Farbe, die mit Acryl abgedeckt ist und in einem Druckwalzenverfahren auf die Außenseite der Hartfaserplatte bzw. Holzspanspatte aufgedruckt und bei ca. 200° C eingebrannt wird.

Der Walzenauftrag der wasserverdünnbaren Farbe wird vorzugsweise mehrmalig durchgeführt. Es empfiehlt sich, eine erste Grundierung, dann eine zweite Grundierung und dann das Dekormuster auf die Hartfaserplatte bzw. Holzspanplatte aufzudrucken. Es werden dabei ca. 100 g/m² wasserverdünnbare Farbe aufgetragen. Die Farbe wird in einem Trockenkanal getrocknet. Danach wird ein Acryllack, vorzugsweise ein säurefester Speziallack, aufgetragen, und zwar vorzugsweise ca. 12 bis 14 g/m². Die Acrylfarbe wird UV-getrocknet.

Die Verbundplatte 10 ist als Wandplatte, Bodenplatte, Deckenplatte und eventuell auch Dachplatte in Anwendungsfällen geeignet, in denen mit Schwitzwasserbildung nicht zu rechnen ist.

Fig. 2 zeigt eine Verbundplatte 20, bei der eine Hartschaumplatte 11 beidseits mit Deckschichten gemäß Fig. 1 belegt ist. Es ist also auf beiden Seiten der Hartschaumplatte 11 mit Kleber 13 eine Hartfaserplatte 12 oder Holzspanplatte aufgeklebt, deren Außenseite mit einem Dekor 14 bedruckt ist.

Die Verbundplatte 20 ist als Raumteiler in Anwendungsfällen geeignet, in denen mit Schwitzwasserbildung nicht zu rechnen ist.

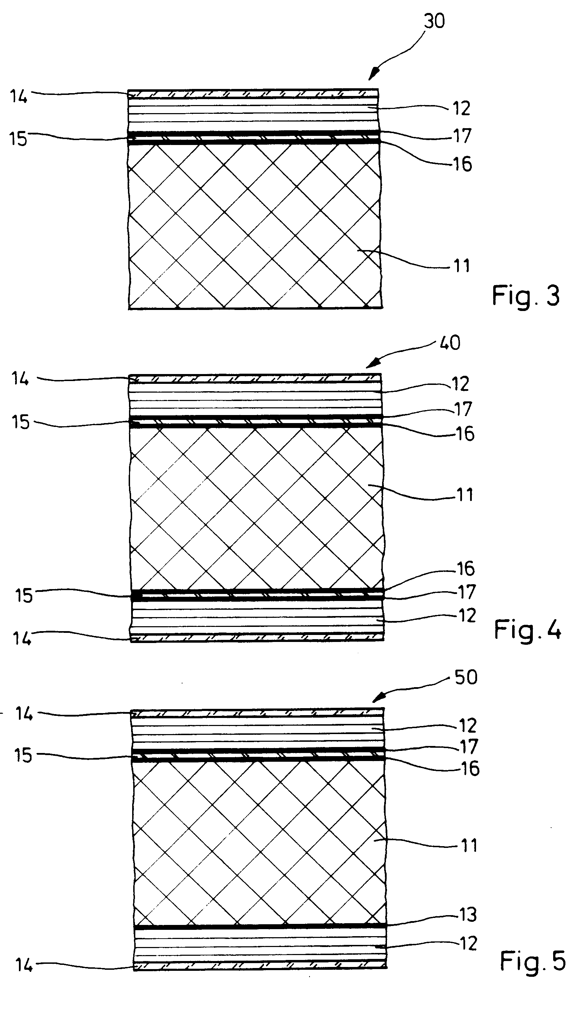

Fig. 3 zeigt eine Verbundplatte 30, die einseitig mit einer Deckschicht belegt ist, bei der zwischen der Hartschaumplatte 11 und der bedruckten Hartfaserplatte 12 bzw. Holzspanplatte eine als Dampfsperre wirkende Polyethylenfolie 15 vorgesehen ist. Die Folie 15 ist auf der einen Seite (Kleber 16) vollflächig mit der Hartschaumplatte 11, und auf der anderen Seite (Kleber 17) vollflächig mit der Hartfaserplatte 12 bzw. Holzspanplatte verklebt. Die Folie 15 verhindert einen Eintritt von wasserdampf von der wärmeren Deckschicht in die kältere Hartschaumplatte 11 und wirkt so einer Bildung von Kondensat entgegen.

Die Verbundplatte 30 ist als Dachplatte, Wandplatte, Bodenplatte und Deckenplatte für Anwendungsfälle geeignet, in denen mit Schwitzwasserbildung gerechnet werden muß.

Fig. 4 Zeigt eine Verbundplatte 40, bei der eine Hartschaumplatte 11 beidseits mit Deckschichten gemäß Fig. 3 belegt ist. Es ist also auf beiden Seiten der Hartschaumplatte 11 unter Einschaltung einer Polyethylenfolie 15 mit Kleber 16, 17 eine Hartfaserplatte 12 oder Holzspanplatte aufgeklebt, deren Außenseite mit einem Dekor 14 bedruckt ist.

Die Verbundplatte 40 ist als Raumteiler für Anwendungsfälle geeignet, in denen mit Schwitzwasserbildung gerechnet werden muß.

Fig. 5 zeigt eine Verbundplatte 50, bei der eine Hartschaumplatte 11 beidseits mit Deckschichten belegt ist, und zwar auf der einen Seite mit einer Deckschicht gemäß Fig. 1, die keine Polyethylenfolie enthält, und auf der anderen Seite mit einer Deckschicht gemäß Fig. 3, bei der zwischen der Hartschaumplatte 11 und der Hartfaserplatte 12 bzw. Holzspanplatte eine Polyethylenfolie 15 eingeschaltet ist. Die Verbundplatte 50 ist als Raumteiler für spezielle Anwendungsfälle geeignet.

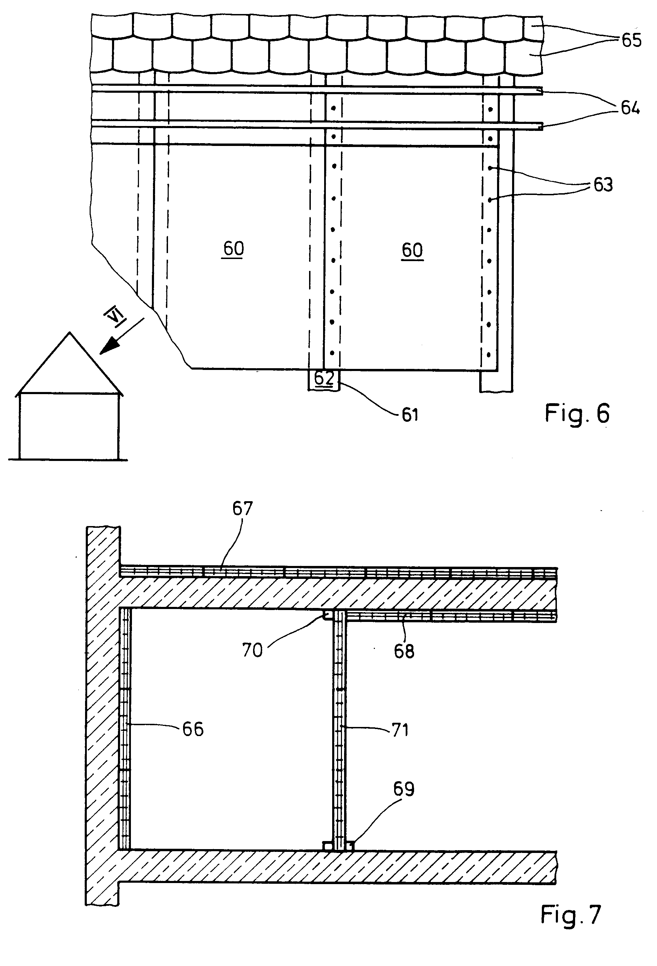

Fig. 6 Zeigt die Verlegung von erfindungsgemäßen Verbundplatten als Dachplatten 60, wofür die Verbundplatten 30 gemäß Fig. 3 besonders geeignet sind. Es ist eine Dachkonstruktion mit Dachsparren 61 dargestellt, auf die an der Sparrenaußenseite 62 Dachplatten 60 aufgenagelt sind. Die mit dem Dekor 14 versehene Plattenseite weist dabei nach innen. Nagelreihen sind bei 63 angedeutet. Die Breite der Dachplatten 60 entspricht dem Rastermaß der Sparren 61, so daß der Stoß benachbarter Dachplatten 60 in der Sparrenmitte liegt und vom Inneren des Gebäudes nicht sichtbar ist. Entsprechende Verbundplatten werden durch den Hersteller in den vom Bauherren vorgegebenen Maßen und in dem jeweils gewünschten Dekor bereitgestellt. Außen auf den Dachplatten 60 ist ein Lattengerüst 64 verlegt, das die Dachpfannen 65 trägt.

Bei dem Ausführungsbeispiel gemäß Fig. 6 sind die Dachplatten 60 über den Sparren 61 verlegt, doch ist auch eine Verlegung unter den Sparren möglich (nicht dargestellt).

Fig. 7 zeigt als Wandplatte 66, Bodenplatte 67 und Deckenplatte 68 verlegte Verbundplatten 10, 30 mit einem Aufbau, wie er in Fig. 1 bzw. Fig. 3 dargestellt ist. Die Platten 66, 67, 68 sind mit dem jeweiligen Untergrund verklebt oder mechanisch daran befestigt, wobei ihre mit dem Dekor 14 bedruckte Seite zum Rauminnern weist. Gemäß Fig. 7 ist außerdem eine raumhohe Verbundplatte 20, 40 mit einem Aufbau gemäß Fig. 2 bzw. Fig. 4 zwischen Bodenleisten 69 und Deckenleisten 70 als Raumteiler 71 angeordnet.

## Patentansprüche

1. Verbundelement für Bauzwecke mit einer inneren Platte (11) aus Hartschaumstoff, insbesondere Polystyrol-Partikel-Schaumstoff, und wenigstens einer damit verbundenen äußeren Deckschicht, zu der eine dünne Holzwerkstoffplatte (12) in Form einer Hartfaserplatte oder Spanplatte gehört, deren äußere Oberfläche mit einem Dekor (14) versehen ist, dadurch gekennzeichnet, daß das Dekor unmittelbar auf die Holzwerkstoffplatte (12) aufgedruckt ist.

2. Verbundelement nach Anspruch 1, dadurch gekennzeichnet, daß die Holzwerkstoffplatte (12) zwischen 1 mm und 6 mm, vorzugsweise 2,5 mm bis 3 mm dick ist.

3. Verbundelement nach Anspruch 1 oder 2, dadurch gekennzeichnet, daß die Holzwerkstoffplatte (12) mit der Hartschaumplatte (11) verklebt ist.

4. Verbundelement nach einem der Ansprüche 1 bis 3, dadurch gekennzeichnet, daR zwischen der Hartschaumplatte (11) und der Holzwerkstoffplatte (12) eine Folie (15) mit hohem Dampfdiffusionswiderstand, vorzugsweise eine Polyethylenfolie, vorgesehen ist.

5. Verbundelement nach einem der Ansprüche 1 bis 4, dadurch gekennzeichnet, daß die Folie (15) mit der Hartschaumplatte (11) und der Holzwerkstoffplatte (12) verklebt ist.

6. Verbundelement nach einem der Ansprüche 1 bis 5, dadurch gekennzeichnet, daß die Hartschaumplatte (11) auf einer Seite mit einer Deckschicht mit oder ohne Folie (15) versehen ist.

7. Verbundelement nach einem der Ansprüche 1 bis 4, dadurch gekennzeichnet, daß die Hartschaumplatte (11) auf beiden Seiten mit je einer Deckschicht versehen ist, von denen beide mit oder ohne Folie (15), aber auch die eine mit und die andere ohne Folie (15) ausgebildet sein können.

8. Verbundelement nach einem der Ansprüche 1 bis 7, gekennzeichnet durch die Gestaltung als Dachplatte (60) vorzugsweise im Rastermaß der Dachsparren (61), Wandplatte (66), Bodenplatte (67), Deckenplatte (68) oder Raumteiler (71).

## Claims

1. Composite element for construction purposes, having an inner plate (11) of rigid foam, in particular polystyrene particle foam, and at least one outer covering layer which is connected thereto and with which there is associated a thin plate (12) of timber-derived material in the form of a plate of hardboard or chip board, whereof the outer surface is provided with a pattern (14), characterized in that the pattern is printed directly onto the plate (12) of timber-derived material.

2. Composite element according to Claim 1, characterized in that the plate (12) of timber-derived material is between 1 mm and 6 mm, preferably 2.5 mm to 3 mm thick.

3. Composite element according to Claim 1 or 2, characterized in that the plate (12) of timber-derived material is glued to the rigid foam plate (11).

4. Composite element according to one of Claims 1 to 3, characterized in that a foil (15) having high steam diffusion resistance, preferably a polyethylene foil, is provided between the rigid foam plate (11) and the plate (12) of timber-derived material.

5. Composite element according to one of Claims 1 to 4, characterized in that the foil (15) is glued to the rigid foam plate (11) and the plate (12) of timber-derived material.

6. Composite element according to one of Claims 1 to 5, characterized in that the rigid foam plate (11) is provided on one side with a covering layer with or without foil (15).

7. Composite element according to one of Claims 1 to 4, characterized in that the rigid foam plate (11) is provided on both sides with one covering layer respectively, both of which can be constructed with or without foil (15) or one with and the other without foil (15).

8. Composite element according to one of Claims 1 to 7, characterized by the design as a roof plate (60), preferably in modular dimension of the rafters (61), wall plate (66), floor plate (67), ceiling plate (68) or room partition (71).

## Revendications

1. Elément composite de construction comportant un panneau intérieur (11) en mousse dure, en particulier de la mousse de particules de polystyrène, et au moins une couche de couverture extérieure assemblée à celui-ci, dont fait partie un panneau (12) mince en un matériau à base de bois sous la forme d'un panneau de fibres dur ou un panneau d'aggloméré, dont la surface extérieure est pourvue d'un décor (14), caractérisé en ce que le décor est directement imprimé sur le panneau (12) en matériau à base de bois.

2. Elément composite selon la revendication 1, caractérisé en ce que le panneau (12) en matériau à base de bois est d'une épaisseur comprise entre 1 mm et 6 mm, de préférence entre 2,5 mm et 3 mm.

3. Elément composite selon la revendication 1 ou 2, caractérisé en ce que le panneau (12) en matériau à base de bois est collé au panneau en mousse dure (11).

4. Elément composite selon l'une des revendications 1 à 3, caractérisé en ce qu'entre le panneau en mousse dure (11) et le panneau (12) en matériau à base de fibres de bois il est prévu une feuille (15) présentant une grande résistance à la diffusion de vapeur, de préférence une feuille de polyéthylène.

5. Elément composite selon l'une des revendications 1 à 4, caractérisé en ce que la feuille (15) est collée au panneau de mousse dure (11) et au panneau (12) en matériau à base de bois.

6. Elément composite selon l'une des revendications 1 à 5, caractérisé en ce que le panneau en mousse dure (11) est pourvu sur une face d'une couche de couverture avec ou sans feuille (15).

7. Elément composite selon l'une des revendications 1 à 4, caractérisé en ce que le panneau en mousse dure (11) est pourvu sur chacune des deux faces d'une couche de couverture, les deux faces pouvant être réalisées avec ou sans feuille (15), mais aussi une face avec feuille (15) et l'autre face sans feuille (15).

8. Elément composite selon l'une des revendications 1 à 7, caractérisé par sa conformation en tant que panneau de toiture (60) de préférence suivant le module des chevrons (61), ou en tant que panneau de revêtement de mur (66), dalle de sol (67), dalle de plafond (68) ou cloison (71).
